# EUROPEAN PATENT APPLICATION

(11) **EP 4 721 548 A1**
(43) Date of publication of application: **08.04.2026**
(21) Application number: 25204291.6
(22) Date of filing: 24.09.2025
(51) Int. Cl.: A01D 41/12, A01D 41/127, G06T 15/20, G06V 20/56

(54) **MONITORING THE DISPERSAL OF RESIDUE MATERIAL**

(30) Priority: 04.10.2024 GB 202414655
(71) Applicant: AGCO International GmbH, 8212 Neuhausen am Rheinfall (CH)
(72) Inventor: STEEN, Kim Arild, 8930 Randers (DK); LAURSEN, Morten Stigaard, 8930 Randers (DK); SLEZAK, Filip, 8930 Randers (DK)
(74) Representative: AGCO Intellectual Property Department

(57) **Abstract**

A mechanism for determining one or more dispersal properties of residue material. Image data of dispersed residue material is projected to produce an image projection of a target area including the dispersed residue material. The image projection is processed to determine the one or more dispersal properties.

## Description

### FIELD

Embodiments of the present disclosure relate generally to monitoring residue material dispersed by a harvesting machine.

### BACKGROUND

There is an increasing use and reliance upon agricultural vehicles to perform agricultural tasks within an agricultural environment. One capability shared by many agricultural vehicles is the spreading of residue material, sometimes simply labelled "residue".

By way of example, a combine harvester is designed to cut crop material before separating the grain from any other material, which other material is known as material-other-than-grain (MOG). The grain is typically stored in a grain bin or other reservoir, and the MOG is expelled or dispersed out of the combine harvester. The dispersed MOG can be subsequently regathered (e.g., for use as fodder, compost or fertilizer) or be left where it lies (e.g., to function as fertilizer for future harvests). Thus, the dispersed MOG functions as residue material.

To perform and control the distribution of residue, an agricultural vehicle comprises a spreader tool, which may include one or more deflectors / steering vanes, rotors or the like which are controllable by an operator of the vehicle.

Historically, the control of the spreader tool has been performed manually. The operator must observe the distribution of the residue material during operation and make any necessary adjustments to the spreader tool manually. The distribution of the residue material can be affected by numerous operating conditions, including wind speed, water content of the residue material, gradient of the field and so on. Accordingly, observing and adjusting the spreader tool manually can be relatively complex and time consuming, especially where the operating conditions vary across the area to be harvested.

In an attempt to address this difficulty, some applications have adopted one or more sensors, e.g. wind direction sensors, ultrasonic sensors, cameras and the like operable to infer or monitor the dispersal or distribution of the residue material in real time. In some instances, information relating to the observed distribution may be relayed to the operator of the vehicle (e.g. via a user interface) who may use this information to adjust operation of the spreader tool. In more sophisticated approaches, control of the spreader tool has been at least partly automated based on data from such sensors, for example by controlling the direction of one or more steering vanes / deflectors in an attempt to account for wind direction.

There is an ongoing desire to improve the accuracy and reliability of the (automated) assessment of the dispersal of residue material from a spreader tool of an agricultural vehicle.

### BRIEF SUMMARY

The invention is defined by the claims.

In accordance with a proposed approach, there is provided a computer-implemented method for monitoring the dispersal of residue material from a spreader tool of an agricultural machine. The method comprises receiving first image data, captured after a dispersal of first residue material by the spreader tool, comprising a representation of a target region in which the dispersed first residue material is expected to lie; projecting the first image data to a desired projection surface to produce a first image projection; and processing the first image projection to determine one or more properties of the dispersal of the first residue material within the target region.

The present disclosure provides a mechanism for performing dispersal analysis based on captured image data. The effective perspective of the image data is modified, such that the first image data is projected onto a desired projection surface. The first image projection produced by this projection is processed to determine one or more properties of the dispersal of the first residue material.

Embodiments recognize that more accurate determination of residue spread properties within a target region (from image data) is achieved when different parts of the target region are shown in the same perspective of the image data, as compared to image data where perspectives differ (e.g., where the viewing direction of the camera capturing the image data is angled with respect to the target region). In particular, projecting the image data to a desired projection surface facilities easier interpretation by an image analysis tool in examining the relative distribution(s) of residue coverage, facilitating more accurate assessment of residue coverage and uniformity.

A further aspect provides a computer-implemented method for monitoring the dispersal of residue material from a spreader tool of an agricultural machine. The method comprises receiving first image data, captured after a dispersal of first residue material by the spreader tool, comprising a representation of a target region in which the dispersed first residue material is expected to lie; projecting the first image data to a desired projection surface to produce a first image projection; and displaying a representation of the first image projection via a user interface associated with the agricultural machine.

In some embodiments, the one or more properties comprises a measure of spread consistency of the first residue material within the target region. Quantifying spread consistency allows for precise evaluation of spreader tool efficiency and enables targeted adjustments to improve uniformity across the field.

In some embodiments, the one or more properties comprises a measure of coverage within the target region. Assessing coverage helps to assess the effectiveness of the dispersal process, for assessing a coverage or amount of field coverage performed by the spreader.

In some embodiments, the desired projection surface is a planar surface. This provides a uniform and interpretable surface against which the property/properties of dispersal can be determined.

In some embodiments, a perspective of the target region in the first image data is different to a perspective of the target region in the first image projection. This feature functions to compensate for a positioning of the camera capturing the image data, ensuring consistent analysis regardless of the image capture conditions.

In some embodiments, the step of projecting the first image data comprises virtually modifying a camera viewpoint of the first image data.

In some embodiments, the step of projecting the first image data comprises producing the first image projection such that all parts of the target region are represented at the same scale. This allows for more accurate determination of the properties of the dispersal of the first residue material, e.g., allowing for accurate comparisons of residue density and distribution across different areas.

In some embodiments, the method further comprises receiving second image data, captured after capture of the first image data, comprising a representation of the target region; projecting the second image data to the desired projection surface to produce a second image projection, wherein the step of processing the first image projection to determine one or more properties of the dispersal of the first residue material within the target region comprises processing the first image projection and the second image projection.

In some embodiments, the step of processing the first image projection and the second image projection comprises: identifying, as a first image portion, a portion of the first image projection that represents the target region; identifying, as a second image portion, a portion of the second image projection that represents the target region; combining the first image portion and the second image portion to produce a combined image portion; and processing the combined image portion to determine the one or more properties of the dispersal of the first residue material.

This multi-step processing approach allows for precise isolation of relevant image areas and facilitates more accurate analysis by combining temporal data, resulting in image data of reduced noise for analysis.

In some embodiments, the combining the first image portion and the second image portion comprises merging the first image portion and the second image portion using an averaging algorithm. Employing an averaging algorithm for image combination reduces the impact of transient anomalies and provides a more representative view of the overall dispersal pattern.

In some embodiments, the step of processing the first image projection comprises using an image segmentation technique to identify one or more image segments that each bound a representation of residue material. Image segmentation enables precise identification and delineation of residue-covered parts of the target region, facilitating accurate quantification of dispersal patterns and coverage.

In some embodiments, the image segmentation technique comprises one or more machine-learning methods.

In some embodiments, the method further comprises controlling an operation of the spreader tool responsive to the determined one or more properties of the first residue material. This feedback loop enables real-time and automated adjustments to spreader operations, optimizing performance based on actual dispersal results to target improved and more consistent spreading of residue material.

In some embodiments, the spreader tool includes a steering mechanism, and the step of controlling an operation of the spreader tool comprises controlling one or more operating parameters of the steering mechanism to control the distribution of residue material from the spreader tool.

In accordance with another proposed approach, there is provided a processing system configured to monitor the dispersal of residue material from a spreader tool of an agricultural machine. The processing system is configured to receive first image data, captured after a dispersal of first residue material by the spreader tool, comprising a representation of a target region in which the dispersed first residue material is expected to lie; project the first image data to a desired projection surface to produce a first image projection; and process the first image projection to determine one or more properties of the dispersal of the first residue material within the target region.

In accordance with yet another proposed approach, there is provided a system comprising the processing system described above and a camera configured to capture the first image data.

This integrated system combines image capture and processing capabilities, providing a complete solution for real-time monitoring of residue dispersal. The inclusion of a dedicated camera ensures consistent image quality and seamless data flow for accurate analysis.

### BRIEF DESCRIPTION OF THE DRAWINGS

One or more embodiments of the invention / disclosure will now be described, by way of example only, with reference to the accompanying drawings, in which:
FIG. 1 illustrates an agricultural system in which embodiments may be employed;
FIG. 2 illustrates a proposed method;
FIG. 3 illustrates a variant proposed method;
FIG. 4 illustrates a step for use in a proposed method;
FIG. 5 illustrates another variant proposed method;
FIG. 6 illustrates a proposed processing system; and
FIG. 7 illustrates the proposed processing system.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a mechanism for determining one or more dispersal properties of residue material. Image data of dispersed residue material is projected to produce an image projection of a target area including the dispersed residue material. The image projection is processed to determine the one or more dispersal properties.

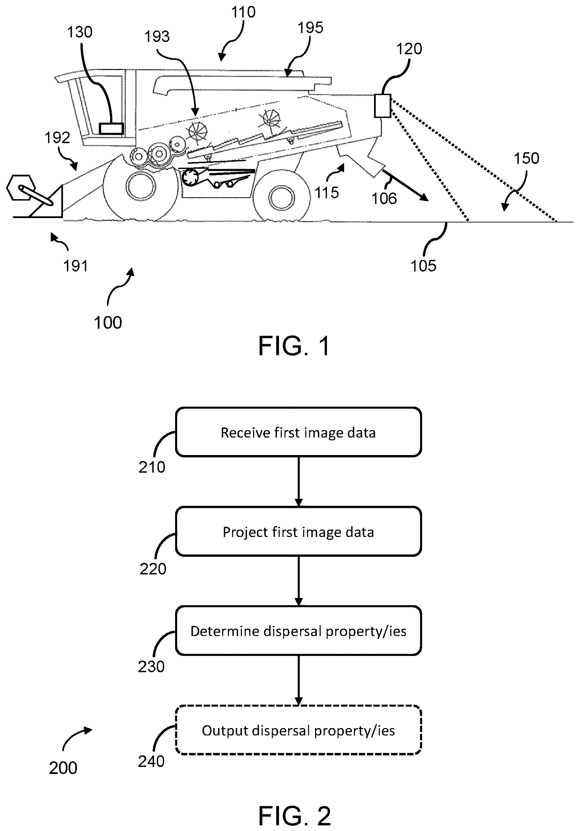

FIG. 1 illustrates an agricultural system 100 in which proposed embodiments may be employed. The agricultural system 100 comprises an agricultural machine 110 (here: a combine harvester) having a spreader tool 115.

The spreader tool 115 is configured to spread, eject or dispel residue material away from the agricultural machine 110, e.g., out of a rear of the agricultural machine. The spread/ejected/dispelled residue material will fall or lie on the ground (i.e., a ground surface 105). In FIG. 1, this is represented by arrow 106 which illustrates the residue material being ejected rearwards from the agricultural machine.

In the illustrated example, the agricultural machine 110 is embodied as a combine harvester. The combine harvester 110 is coupled to a header 191 which is operable, in use, to cut and gather a strip of crop material as the combine harvester 110 is driven across a field / area to be harvested during a harvesting operation. A conveyor section 192 conveys the cut crop material from the header 192 into a crop processing apparatus 193 operable to separate grain and non-grain (i.e. material other than grain (MOG) or residue material (used interchangeably herein)) as will be appreciated. It is noted here that apparatus for separating grain and non-grain material are well-known in the art and the present invention is not limited in this sense. The skilled person will appreciate that numerous different configurations for the crop processing apparatus may be used as appropriate. Clean grain separated from the cut crop material is collected in a grain bin, which may be periodically emptied, e.g. into a collection vehicle, storage container, etc. utilizing an unloading auger 195. The remaining non-grain material (MOG) / residue material is separately moved to the spreader tool 115 which is operable in use to eject the non-grain material or MOG from the rear of the combine harvester 10 and onto the ground. It will be appreciated that in some embodiments the combine harvester 10 may also include a chopper tool positioned, for example, between the crop processing apparatus 16 and the spreader tool 115 and operable, in use, to cut the residue material before it is spread by the spreader tool 115.

However, other examples of agricultural machines with spreader tools will be readily apparent to the skilled person, such as fertilizer spreaders, manure spreaders, or even seed drills.

The agricultural system 100 further comprises a camera 120 (e.g., a visible light camera) mounted to the agricultural vehicle 110. Typically, the camera 120 captures image data that is used for performing object detection, e.g., to identify hazards in the vicinity of the agricultural system.

The present disclosure recognizes that image data captured by a camera at the rear of the agricultural machine (e.g., pointing behind the agricultural machine) will comprise a representation of a region 150 in which residue material spread by the spreader 115 has fallen, which region 150 can be labelled a "target region".

Accordingly, it is possible for the agricultural system 100 to comprise a processing system 130, e.g., mounted to the agricultural machine, that processes the captured image data and determines one or more properties of the residue material in the target region 150. The processing system 130 may, for instance, comprise an electronic processor, an electronic input and one or more electronic outputs. The processor is operable to access a memory of the processing system and execute instructions stored therein to perform its functionality.

The present disclosure proposes an improved approach for processing image data representing a target region to determine one or more properties of first residue material in the target region. The proposed approach may be adopted or performed by the processing system 130 (and/or overall agricultural system 100).

FIG. 2 is a flowchart illustrating a proposed (computer-implemented) method 200, which may be performed by the processing system 130.

As outlined above, the processing system 130 may comprise an electronic processor configured to execute appropriate configured instructions (e.g., stored by a memory) to perform the steps of the method 200.

The method 200 comprises a step 210 of receiving first image data.

The first image data is captured after a dispersal of first residue material by the spreader tool and comprises a representation of a target region in which the dispersed first residue material is expected to lie. The first image data may, for instance, be captured by the camera 120 (FIG. 1).

In some instances, step 210 is performed passively, e.g., waiting for first image data to be received. This could occur, for example, when the camera is set up to automatically capture and transmit images at predetermined intervals or based on certain trigger events (such as the activation of the spreader tool). The processing system remains in a receptive state, ready to accept incoming data without actively initiating the data acquisition process.

In other examples, step 210 comprises an active step, e.g., retrieving the first image data from a memory. In this case, the image data may have been previously captured and stored in an accessible local or remote memory. Step 210 may comprise retrieving the relevant image data from this storage location.

As another example of an active step, step 210 may comprise controlling a/the camera to capture the first image data. In this approach, step 210 may comprise directly interfacing with the camera, sending commands to initiate image capture at a specific moment.

The method 200 further comprises a step 220 of projecting the first image data to a desired projection surface to produce a first image projection. This may be performed using, for instance, one or more lens models (for the camera) and/or known geometrical relationships between the camera (e.g., its position and direction).

It will be appreciated that, in the context of the present disclosure, an image projection may be itself considered a form of digital image (e.g., data that can be rendered for display at a screen or other output user interface). Similarly, the image data may itself be a digital image or data from which a digital image is derivable.

In some examples, the desired projection surface is a (e.g., part of a) ground surface 105 (FIG. 1) on which the agricultural machine is positioned. This provides a standardized reference plane for analyzing the dispersal pattern of residue material which represents the real-world surface or region for residue material dispersal.

In particular, a perspective of the target region in the first image data may be different to a perspective of the target region in the first image projection. Thus, in such examples, step 220 functions to transform the first image data (which may have been captured from an angled or skewed perspective) into a different format, which may be more standardized and/or easily interpretable. Thus, in such examples, the perspective of the first image data (received in step 210) may be a skewed or angled perspective with respect to the desired projection surface.

In other words, step 220 may comprise virtually modifying a camera viewpoint of the first image data to produce the first image projection. Preferably, the (virtually modified) camera viewpoint is one that lies on a hypothetical line perpendicular to the ground surface on which the agricultural machine is positioned or lies, so that the desired projection surface is a (e.g., part of a) ground surface 105 (FIG. 1) on which the agricultural machine is positioned.

Put yet another way, step 220 may comprise virtually modifying a viewing direction of a camera that captured the first image data to produce the first image projection, which is thereby associated with a virtual viewing direction. Preferably, the virtual viewing direction is perpendicular to the ground surface one which the agricultural machine is positioned or lies, so that the desired projection surface is a (e.g., part of a) ground surface 105 (FIG. 1) on which the agricultural machine is positioned.

Conceptually, the projection process 220 in such examples can be considered as a virtual repositioning of the camera that captured the original image data. Instead of the actual camera position, which may have been at an angle to the ground or partially obstructed, the projection process 220 creates (as the first image projection) an image projection as if the camera were positioned (substantially) directly above the target region, looking (substantially) straight down. This virtual camera viewpoint provides a consistent perspective across the entire image, eliminating distortions that could affect the accuracy of subsequent analysis steps.

In some examples, the desired projection surface is a flat/planar surface. This may represent an idealized view of the target region. By projecting the image data onto this surface, the method effectively "flattens" the perspective, creating a uniform representation of the residue distribution across the entire target area.

A wide variety of techniques can be employed in the performance of step 220 to project the image data to produce the first image projection. In some examples, a position and pose/direction of the camera (that captured the first image data), with respect to a desired projection surface may be predetermined or known in advance, e.g., from a calibration process.

This information can be used to appropriately modify or warp the value(s) of the first image data to produce the first image projection, e.g., using geometric transformations or image warping algorithms. Such algorithms may comprise applying one or more mathematical operations to the pixel coordinates and values of the original image data to map them onto the desired projection surface, thereby producing the first projection image.

In some examples, step 220 may use techniques such as homography estimation or perspective transformation to accurately map the image data onto the desired projection surface.

In some examples, as previously mentioned, step 220 may use one or more lens models to process the first image data to produce the first image projection. It is understood that a lens model is effectively a mathematical representation of how a lens of a camera maps three-dimensional points in the world to two-dimensional points on an image sensor, thereby defining the optical characteristics and distortions of a lens. The lens model may thereby be exploited to accurately map data elements in the first image data to positions on a desired projection surface to produce the first projection data, e.g., using pixel remapping and/or perspective/distortion correction techniques.

In some examples, the first image data further comprises a plurality of pixel data elements, each representing a different sub-area or sub-volume within an imaged region. Each pixel data element may comprise one or more intensity/color values and a depth value. The depth value of each pixel data elements can be exploited in the generating of the first projection data to accurately map the pixel data elements onto the desired projection surface. In some cases, the depth values may be used to adjust the positioning or scaling of pixel data elements in the first image projection, ensuring that objects at different distances from the camera are represented with appropriate relative sizes and positions on the projected surface. This helps provide a more faithful representation of the three-dimensional distribution of residue material in the two-dimensional projected image.

The outlined example approaches for performing a projection process to execute step 220 are non-exhaustive, and the skilled person would readily appreciate and make use of any suitable projection process for processing first image data to produce a first image projection on a desired projection surface.

The method 200 also comprises a step 230 of processing the first image projection to determine one or more properties of the dispersal of the first residue material within the target region.

The one or more properties may comprise a measure of spread consistency of the first residue material within the target region and/or a measure of coverage within the target region and/or a measure of skewness of the first residue material within the target region.

In this context, a "measure of spread consistency" refers to a (predicted) quantitative measure of how uniformly the residue material is distributed across the target region. The measure of spread consistency may be defined as the variance or standard deviation of residue density or thickness across different areas within the target region. Typically, a higher measure of spread consistency indicates a more uniform distribution of residue material.

Similarly, in this context, a "measure of coverage" is a quantitative measure of the (predicted) proportion or percentage of the target region that is covered by dispersed residue material. This may be expressed as a ratio or percentage of the total target region area that has residue material present. Typically, a higher measure of coverage indicates that a larger portion of the target region has been covered by the dispersed residue material.

In this context, a "measure of skewness" may refer to a quantitative measure of the asymmetry in the distribution of residue material within the target region. The measure of skewness may indicate the degree to which the dispersal pattern deviates from a symmetrical distribution around a central axis or point. For instance, a positive skewness may suggest that the residue material is concentrated more heavily on one side of the target region, while a negative skewness may indicate a concentration on the opposite side.

In some examples, step 230 may comprise applying an image segmentation technique to the first image projection to identify and isolate regions within the first image projection that represent residue material. In other words, the image segmentation technique functions to discriminate parts/segments of the first image projection representing the first residue material from parts/segments representing anything else (e.g., a ground surface or similar). Step 230 may then calculate one or more properties (e.g., measure uniformity and/or coverage) based on the identified regions within the first image projection.

By way of example, step 230 may comprise creating a mask that identifies, for each of a plurality of parts/segments of the first image projection, whether or not said part represents the first residue material. In some examples, each part is of a uniform size (e.g., a pixel or similar). In other examples, each part is defined by identified boundaries of any representation of the first residue material in the first image projection. This can be performed using, for instance, an appropriately trained machine-learning methods such as a CNN or a color/intensity discrimination technique.

Example machine-learning methods that may be exploited include those set out by Ghosh, Swarnendu, et al. "Understanding deep learning techniques for image segmentation." ACM computing surveys (CSUR) 52.4 (2019): 1-35; Minaee, Shervin, et al. "Image segmentation using deep learning: A survey." IEEE transactions on pattern analysis and machine intelligence 44.7 (2021): 3523-3542 and/or Khan, Abdullah Ayub, Asif Ali Laghari, and Shafique Ahmed Awan. "Machine learning in computer vision: a review." EAI Endorsed Transactions on Scalable Information Systems 8.32 (2021): e4-e4. Other examples will be readily apparent to the skilled person.

Once the part(s) represent first residue material have been distinguished (e.g., from the background), step 230 may then analyze the resulting mask to determine the one or more properties such as spread consistency and coverage.

For instance, to determine a spread consistency, step 230 may divide the first image projection into a grid and calculate, for each grid cell, the percentage of said grid cell occupied by any residue-classified part. The variance of these percentages across all cells may provide a measure of spread consistency, with lower variance indicating more uniform distribution.

In another example approach for determining a spread consistency, step 230 may use a frequency domain analysis. In this approach, the first image projection may be transformed into the frequency domain (e.g., using a Fourier-based transform). The resulting frequency spectrum may be examined for patterns indicative of spread consistency. A more uniform spread may result in a spectrum with fewer high-frequency components, while an inconsistent spread may produce more pronounced high-frequency elements.

To determine a measure of (residue) coverage, step 230 may simply calculate the percentage of the first image projection that is identified as representing the first residue material. This provides a direct measure of the proportion of the target area covered by residue material.

To determine a measure of skewness, step 230 may, for instance, divide the first image projection into equal sections and compare the amount of first residue material identified in each section to one another to determine the measure of skewness. As another example, step 230 may comprise calculating a center of mass of the identified residue material and comparing this center of mass to the geometric center of the first image projection, the distance or displacement of the center of mass from the geometric center functioning as an indicator of skewness.

The above-described examples are merely exemplary and are considered non-exhaustive. Other example approaches will be readily apparent to the appropriately skilled person.

In some examples, method 200 may further comprise a step 240 of outputting the determined one or more properties.

In some examples, step 240 comprises controlling a user interface to provide a user-perceptible output representing the determined one or more properties. For instance, step 240 may comprise controlling a display to provide a visual representation of the determined one or more properties. As another example, step 240 may comprise controlling a light (e.g., a beacon or flashing light) responsive to the determined one or more properties, e.g., to only emit light when the determined one or more properties indicates that the determined one or more properties fail to meet one or more predetermined criteria.

In some examples, step 240 comprises passing the determined one or more properties to a further processing system or device for performing further processing.

In some examples, step 240 comprises storing the determined one or more properties in a memory or other storage unit. Examples are well known to the skilled person.

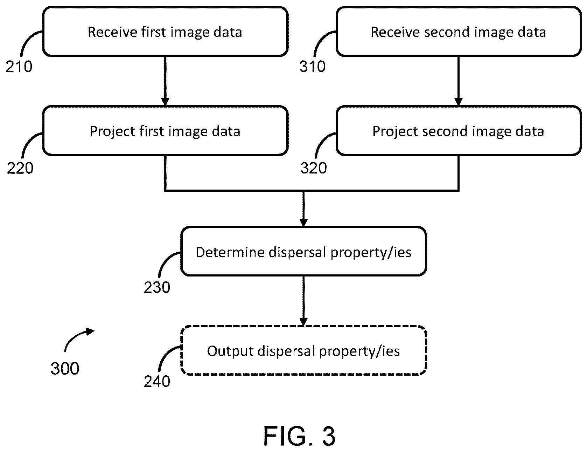

FIG. 3 is a flowchart illustrating a variant (computer-implemented) method 300, which may be performed by the processing system 130 (FIG. 1). As previously mentioned, , the processing system 130 may comprise an electronic processor configured to execute appropriate configured instructions (e.g., stored by a memory) to perform the steps of the method 300.

The method 300 comprises step 210 of receiving first image data and step 220 of projecting the first image data to produce the first image projection. This may be embodied as previously described.

The method 300 also comprises a step 310 of receiving second image data. The second image data is captured after the first image data, and comprises a representation of the target region. In particular examples, the second image data may be captured by the same camera used to capture the first image data. However, this is not essential.

Step 310 may be performed in a similar or analogous manner to step 210 previously described, and approaches are therefore not described in detail for the sake of clarity.

The method 300 also comprises a step 320 of projecting the second image data to the desired projection surface to produce a second image projection. Thus, the second image projection is defined in the same desired projection surface as the first image projection. Step 320 can be performed in an analogous method to step 220 previously disclosed, and the process is not repeated for the sake of conciseness.

The method 300 also comprises the step 230 of processing the first image projection to determine one or more properties of the dispersal of the first residue material. In this variant, step 230 processes the first image projection and the second image projection to determine the one or more properties.

The method 300 may also comprise the step 240 previously described.

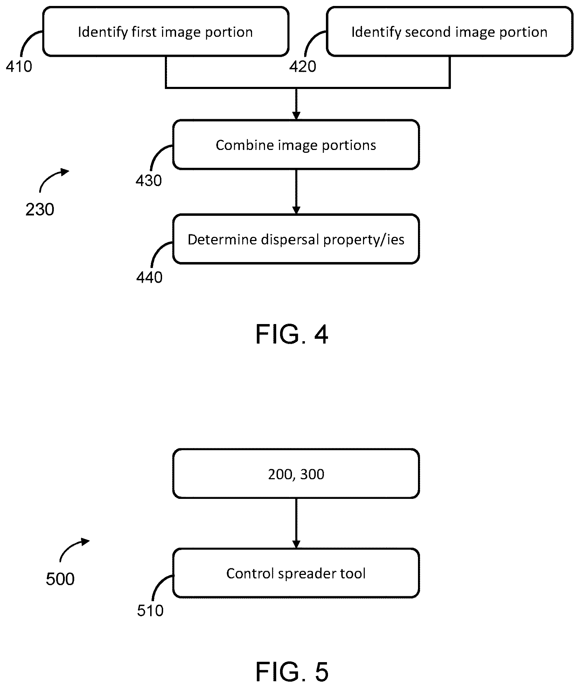

FIG. 4 illustrates one example approach for performing step 230 for the purposes of method 300.

In this approach, step 230 comprises a sub-step 410 of identifying, as a first image portion, a portion of the first image projection that represents the target region and a sub-step 420 of identifying, as a second image portion, a portion of the second image projection that represents the target region.

Sub-steps 410 and 420 may be performed synchronously, e.g., by identifying a respective portion of each image projection that match one another.

In one approach, sub-steps 410 and 420 are performed by directly comparing the image projection(s) to one another (e.g., to find portions containing matching content). In other words, this approach comprises analyzing the content of both image projections to find matching areas. By identifying similarities in features, colors, or patterns between the two projections, sub-steps 410 and 420 may isolate the portions that represent the same target region in both image projections.

In another approach, sub-steps 410 and 420 can be performed using characteristics of the agricultural machine (e.g., a speed and/or turning) and a time difference between capture of the first image data and capture of the second image data, which may be indicated by respective timestamps. In particular, this information may be processed to calculate how a target region would have shifted between the two captures of image data. This information allows for the identification of corresponding portions in both image projections.

The step 230 may further comprise a sub-step 430 of combining the first image portion and the second image portion to produce a combined image portion. Sub-step 430 may, for instance, be performed by merging the first image portion and the second image portion using an averaging algorithm.

This averaging process functions to combine the information from both image portions, reducing noise and enhancing the overall quality of the image data used for subsequent analysis. By averaging corresponding pixels or regions from the two image portions, transient anomalies or artifacts that may be present in either individual image projection can be mitigated.

Where the image projections are defined using pixels, the averaging algorithm may operate on a pixel-by-pixel basis, where the intensity or color values of corresponding pixels in the first and second image portions are averaged to produce the combined image portion. Alternatively, it may involve more sophisticated techniques such as weighted averaging.

The step 230 further comprises a sub-step 440 of processing the combined image portion to determine the one or more properties of the dispersal of the first residue material.

Sub-step 440 may be performed in a similar manner to the previously described approach for processing the first image projection alone (described with reference to FIG. 2). Specifically, this means that the combined image portion resulting from the combining of the first and second image portions can be analyzed using the same techniques outlined earlier for a single image projection. These techniques may, for instance, include applying image segmentation to identify regions representing residue material. The techniques are not repeated here for the sake of improved conciseness, and the skilled person would be readily capable of adapting the previously described approach for this embodiment.

Turning back to FIG. 3, in the described and illustrated example, first and second image data is received and processed to determine the one or more properties of the dispersal of the first residue material.

However, the skilled person would readily appreciate how the method 300 may be extended or adapted to further comprise receiving further (instances of) image data that is processed (in step 230) to determine the one or more properties of the dispersal of the first residue material. By receiving and processing multiple instances of image data in succession, the method can provide a more robust and dynamic assessment of the dispersal property/properties.

For example, the method could be adapted to receive a series of image data captures at regular intervals (e.g., every few seconds) as the agricultural machine moves across a field or other agricultural area. Each new instance of image data would be projected onto the desired projection surface and processed in step 230 along with previous projections.

In some examples, the processing in step 230 could be modified to incorporate further temporal analysis techniques, e.g., allowing for the identification of trends or patterns in the dispersal properties over the sequence of image captures. This could involve techniques such as time-series analysis or the use of sliding window averages to smooth out short-term fluctuations and highlight longer-term trends in spread consistency, coverage, or skewness.

FIG. 5 illustrates a further proposed (computer-implemented) method 500 that may be performed by the processing system 130 (FIG. 1).

At will be later elucidated, method 500 can be performed when the spreader tool has one or more modifiable properties or parameters, which are controllable by the processing system executing the method 500.

The method 500 comprises performing any previously described method 200, 300 to determine one or more properties of the dispersal of the first residue material within the target region.

The method 500 further comprises a step 510 of controlling an operation of the spreader tool responsive to the determined one or more properties of the first residue material. In this way, the processing system 130 executing the method 500 functions as a control system for the spreader tool.

By way of example only, consider a scenario in which the spreader tool comprises a steering mechanism, which is controllable to control the direction, distribution and/or amount of residue material expelled from the spreader tool. For instance, the steering mechanism may comprise one or more steering vanes or deflectors, having a controllable position(s) (e.g. rotational position(s)) that controls or defines a direction of residue material spread from the spreader tool.

In such scenarios, the one or more properties (determined in method 200, 300) may comprise a measure of skewness. Accordingly, step 510 may be configured to control the steering mechanism to control the (e.g., average) direction in which the residence material is expelled from the spreader tool to reduce or minimize skewness, e.g., to provide a more even spread of residue material.

In some scenarios, the spreader tool may comprise one or more expulsion elements (e.g., rotors) that are operable to provide a motive force for expelling the residue material from the spreader tool thereby controlling an amount of residue material expelled from the spreader tool. For example, the expulsion element(s) may comprise rotor(s) that provide or induce an airflow through the spreader tool, or may be operable to provide the motive force through contacting the residue material with one or more moveable elements of the rotor - e.g. a rotatable element.

In such scenarios, the one or more properties (determined in method 200, 300) may comprise a measure of coverage. Accordingly, step 510 may be configured to control the expulsion element(s) to control the amount of residue material expelled from the spreader tool responsive to the measure of coverage, e.g., to increase the amount of residue material expelled for lower levels of coverage and so on.

Where the spreader tool comprises two or more expulsion elements facing different directions, and the one or more properties comprises a measure of spread consistency or skewness, step 510 may be configured to control the speed at which residue material is expelled via each expulsion element of the spreader tool responsive to the one or more properties to thereby control a distance at which the residue material is distributed. This can be controlled, for instance, to improve a coverage of the residue material or reduce a skewedness.

In some scenarios, the spreader tool may include a conveyor system for transporting residue material (e.g., to the one or more expulsion elements). Step 510 may be configured to control a speed of the conveyor system to adjust the rate at which residue material is supplied to the expulsion element(s), thereby influencing the overall distribution pattern. For example, if the measure of coverage indicates insufficient coverage in certain areas, the conveyor speed may be increased to supply more residue material to the expulsion element(s).

In some scenarios, the spreader tool may comprise adjustable baffles or deflectors positioned after the expulsion element(s). Step 510 may be configured to control the position or angle of these baffles to adjust the direction and spread of the expelled residue material. For instance, if the measure of spread consistency indicates an uneven distribution, the baffles may be adjusted to redirect the flow of residue material and achieve a more uniform spread pattern.

A wide variety of other examples will be readily apparent to the skilled person, which may be at least partially dependent upon the precise configuration and design of the spreader tool. It is herein recognized that it would be advantageous to control the function or operation of the spreader tool responsive to one or more properties of dispersal of first residue material.

In this way, the determined one or more properties functions as feedback for controlling the operation of the spreader tool. The skilled person will appreciate that step 510 of method 500 may be adapted to perform more sophisticated control techniques responsive to data produced by multiple iterations of method 200, 300 - where each new instance of first image data is captured at a later point/period in time that in any previous iteration.

Of course, although not described in detail, step 510 may be adapted to further process additional properties or characteristics to control the operation of the spreader tool. For instance, environmental factors such as wind speed and direction, soil moisture content, or terrain characteristics may be taken into account. In some cases, step 510 may comprise receiving data from additional sensors on the agricultural machine or from external sources to incorporate these factors into the control decisions. The control algorithm may also consider historical data or predefined patterns to optimize the spreader tool operation for specific crop types or field conditions.

The skilled person would be readily capable of developing a processing system for carrying out any herein described method. Thus, each step of the flow chart may represent a different action performed by a processing system, and may be performed by a respective module of the processing system.

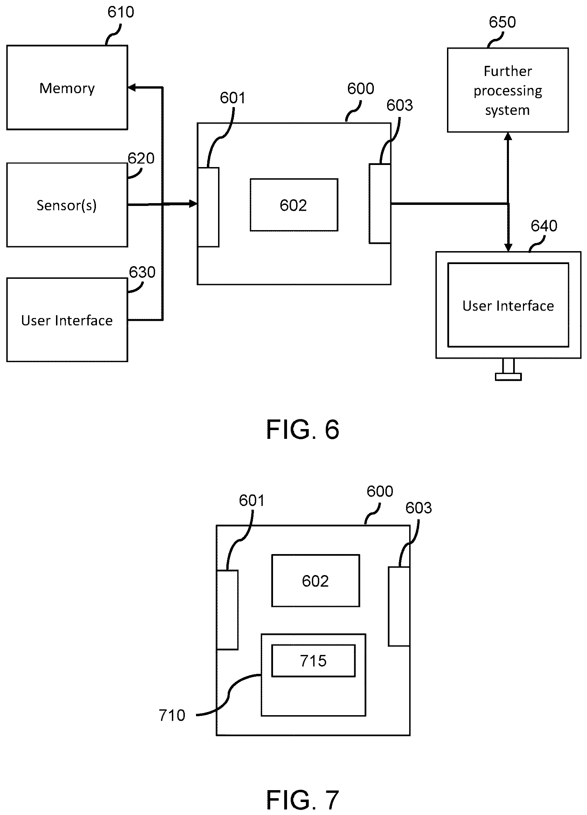

FIG. 6 illustrates a processing system 600 according to an embodiment. The processing system is configured to perform any herein disclosed method 200, 300, 500.

The processing system 600 may thereby receive first image data, captured after a dispersal of first residue material by the spreader tool, comprising a representation of a target region in which the dispersed first residue material is expected to lie. The processing system 600 may receive these values from a memory or storage unit 610 and/or from one or more cameras 620.

More particularly, the processing system 600 may comprise an input interface 601 configured to receive the first image data.

The processing system 600 is further configured to project the first image data to a desired projection surface to produce a first image projection. This may be carried out by a processing unit 602 of the processing system 600.

The processing system 600 is also configured to process the first image projection to determine one or more properties of the dispersal of the first residue material within the target region. This may also be carried out by the processing unit 602 of the processing system 600.

In some examples, the processing system 600 may be configured to output the determined one or more properties. Any output of the processing system may be controlled via an output interface 603. In particular, the output of the processing system may be defined by the processing unit 602 of the processing system via the processing unit.

The processing system 600 may, for instance, store the determined one or more properties in a memory or storage unit 610 and/or control a user interface 640 to provide a user perceptible output of the determined one or more properties and/or pass the determined one or more properties to a further processing system 650 for further processing.

FIG. 7 illustrates an embodiment of the processing system 600 described with reference to FIG. 6. The processing system is able to carry out or perform one or more embodiments of an invention, e.g. for determining one or more properties of the dispersal of the first residue material within a target region.

The processing system 600 comprises an input interface 601 that receives communications from one or more inputting devices. Examples of suitable inputting devices include external memories, sensors, user interfaces (such as mice, keyboards, microphones, and so on).

The processing system 600 also comprises a processing unit 602.

In one example, the processing unit 602 may comprise an appropriately programmed or configured single-purpose processing device. Examples may include appropriately programmed field-programmable gate arrays or complex programmable logic devices.

As another example, the processing unit may comprise a general purpose processing system (e.g. a general purpose processor or microprocessor) that executes a computer program 715 comprising code (e.g. instructions and/or software) carried by a memory 710 of the processing system 600.

The memory 710 may be formed from any suitable volatile or non-volatile computer storage element, e.g. FLASH memory, RAM, DRAM, SRAM, EPROM, PROM, CD-ROM and so on. Suitable memory architectures and types are well known to the person skilled in the art.

The computer program 715, e.g. the software, carried by the memory 710 may include comprise a sequence or set of instructions that are executable by the processing unit for implementing logical functions to carry out the desired method or procedure. Each instruction may represent a different logical function, step or sub-step used in performing a method or process according to an embodiment. The computer-program may be formed from a set of subprograms, as would be known to the skilled person. The computer program 715 may be written in any suitable programming language that can be interpreted by the processing unit 602 for executing the instructions. Suitable programming languages are well known to the skilled person.

The processing system 600 may also comprise an output interface 603. The processing system may be configured to provide information, such as the one or more properties, via the output interface. In some examples, the processing system may be configured to control one or more other devices connected to the output interface 603 by providing appropriate control signals to the one or more other devices. Suitable control examples include controlling a visual representation (e.g. of the one or more properties of the dispersal of the first residue material within the target region) at a user interface or controlling the operation of a spreader tool (when performing method 500).

Different components of the processing system 600 may interact or communicate with one another via one or more intra-system communication systems (not shown), which may include communication buses, wired interconnects, analogue electronics, wireless communication channels (e.g. the internet) and so on. Such intra-system communication systems would be well known to the skilled person.

It is not essential for the processing system 600 to be formed on a single device, e.g. a single computer. Rather, any of the system blocks (or parts of system blocks) of the illustrated processing system may be distributed across one or more computers.

There is also provided a system comprising any herein proposed processing system; and a camera configured to capture the first image data (and optionally, if used, second image data).

There is also proposed an agricultural system comprises the proposed system and the agricultural machine comprising the spreader tool, e.g., an agricultural vehicle. The proposed system may be mounted on the agricultural machine. In such examples, the camera may be configured to have a field-of-view to the rear of the agricultural machine, e.g., behind the agricultural machine.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

A computer program may be stored on a computer-readable medium, itself an embodiment of the invention. A "computer-readable medium" is any suitable mechanism or format that can store a program for later processing by a processing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for monitoring the dispersal of residue material from a spreader tool of an agricultural machine, the computer-implemented method comprising:
receiving first image data, captured after a dispersal of first residue material by the spreader tool, comprising a representation of a target region in which the dispersed first residue material is expected to lie;
projecting the first image data to a desired projection surface to produce a first image projection; and
processing the first image projection to determine one or more properties of the dispersal of the first residue material within the target region.

2. The computer-implemented method of claim 1, wherein the one or more properties comprises a measure of spread consistency of the first residue material within the target region.

3. The computer-implemented method of claim 1 or 2, wherein the one or more properties comprises a measure of coverage within the target region.

4. The computer-implemented method of any one of claims 1 to 3, wherein the desired projection surface is a planar surface.

5. The computer-implemented method of any one of claims 1 to 4, wherein a perspective of the target region in the first image data is different to a perspective of the target region in the first image projection.

6. The computer-implemented method of claim 5, wherein the step of projecting the first image data comprises virtually modifying a camera viewpoint of the first image data.

7. The computer-implemented method of any one of claims 1 to 6, further comprising:
receiving second image data, captured after capture of the first image data, comprising a representation of the target region;
projecting the second image data to the desired projection surface to produce a second image projection,
wherein the step of processing the first image projection to determine one or more properties of the dispersal of the first residue material within the target region comprises processing the first image projection and the second image projection.

8. The computer-implemented method of claim 7, wherein the step of processing the first image projection and the second image projection comprises:
identifying, as a first image portion, a portion of the first image projection that represents the target region;
identifying, as a second image portion, a portion of the second image projection that represents the target region;
combining the first image portion and the second image portion to produce a combined image portion; and
processing the combined image portion to determine the one or more properties of the dispersal of the first residue material.

9. The computer-implemented method of claim 8, wherein the combining the first image portion and the second image portion comprises merging the first image portion and the second image portion using an averaging algorithm.

10. The computer-implemented method of any one of claims 1 to 9, wherein the step of processing the first image projection comprises using an image segmentation technique to identify one or more image segments that each bound a representation of residue material.

11. The computer-implemented method of claim 10, wherein the image segmentation technique comprises one or more machine-learning methods.

12. The computer-implemented method of any one of claims 1 to 11, further comprising controlling an operation of the spreader tool responsive to the determined one or more properties of the first residue material.

13. The computer-implemented method of claim 12, wherein the spreader tool includes a steering mechanism, and the step of controlling an operation of the spreader tool comprises controlling one or more operating parameters of the steering mechanism to control the distribution of residue material from the spreader tool.

14. A processing system configured to monitor the dispersal of residue material from a spreader tool of an agricultural machine, the processing system being configured to:
receive first image data, captured after a dispersal of first residue material by the spreader tool, comprising a representation of a target region in which the dispersed first residue material is expected to lie;
project the first image data to a desired projection surface to produce a first image projection; and
process the first image projection to determine one or more properties of the dispersal of the first residue material within the target region.

15. A system comprising:
the processing system of claim 14; and
a camera configured to capture the first image data.
